# EUROPEAN PATENT APPLICATION

(11) **EP 4 841 246 A1**
(43) Date of publication of application: **18.11.2026**
(21) Application number: 25853515.2
(22) Date of filing: 14.05.2025
(51) Int. Cl.: G01N 21/64

(54) **CURRENT COLLECTOR DETECTION SYSTEM AND METHOD**

(30) Priority: 15.08.2024 CN 202411120943
(71) Applicant: Contemporary Amperex Technology Co., Limited, Ningde, Fujian 352100 (CN)
(72) Inventor: ZHENG, Tuo, Ningde, Fujian 352100 (CN); CHU, Feng, Ningde, Fujian 352100 (CN); WANG, Xing, Ningde, Fujian 352100 (CN); LI, Diwu, Ningde, Fujian 352100 (CN); LI, Shisong, Ningde, Fujian 352100 (CN); HUANG, Xuejun, Ningde, Fujian 352100 (CN)
(74) Representative: Lorenz Seidler Gossel Part. mbB
(86) International application number: PCT/CN2025/094740
(87) International publication number: WO 2026/036813

(57) **Abstract**

A current collector detection system (100) and method. The system comprises: a light source module (110), which is arranged at an outlet of a foil rolling mill, reciprocates in a first direction, and is configured to emit first light to irradiate the surface of a target current collector, such that the target current collector receives the first light and re-emits second light on the basis of the first light, wherein the target current collector has been coated with oil, and the target current collector moves in a second direction; a photoelectric conversion module (120), which is configured to receive the second light re-emitted by the target current collector and convert the second light into a first electrical signal; and a processor, which is electrically connected to the photoelectric conversion module (120), and is configured to receive the first electrical signal, determine, on the basis of pre-calibrated correspondences between electrical signals and fluorescence intensities, a first fluorescence intensity corresponding to the first electrical signal, and determine, when the first fluorescence intensity is higher than a first preset threshold, that the oil loading amount of the target current collector exceeds a second preset threshold.

## Description

### CROSS-REFERENCE TO RELATED APPLICATIONS

The present application claims the priority to Chinese Patent Application No. 202411120943.8, filed on August 15, 2024 and entitled "Current Collector Detection System and Method", which is incorporated herein by reference in its entirety.

### TECHNICAL FIELD

The present application relates to the technical field of batteries, and in particular, to a current collector detection system and method.

### BACKGROUND

In the production process, the current collector of the lithium-ion battery needs to be sprayed with a large amount of rolling oil to prevent roller sticking, and also plays a role in cleaning and cooling. The rolling oil is composed of a base oil and a low-alcohol high-ester composite additive, wherein the ester is difficult to volatilize, and a small amount of rolling oil will remain on the surface of the finished current collector without oil removal processes such as annealing and cleaning. If the oil loading amount is too large, problems such as local coating omission or point coating omission will occur when the surface of the current collector is coated with carbon, which in turn leads to the electrode tab being welded, and the prepared electrode plate active material has insufficient bonding force with the current collector and is peeled off, resulting in the problems of short circuit and low capacity in the battery cell.

Therefore, a solution capable of accurately detecting whether the oil loading amount of the current collector exceeds the standard is needed.

### SUMMARY

The present application provides a system and a method for detecting a current collector, which can accurately detect whether the oil loading amount of the current collector exceeds the standard.

According to a first aspect, the present application provides a current collector detecting system, and the system includes: a light source module, arranged at an outlet of a foil rolling mill, capable of reciprocating in a first direction, and configured to emit first light to irradiate the surface of a target current collector, such that the target current collector receives the first light and reflects a second light based on the first light, the target current collector being sprayed with oil stains, and the target current collector moving in a second direction, and the second direction intersecting the first direction; a photoelectric conversion module, configured to receive the second light reflected by the target current collector and convert the second light into a first electrical signal; a processor, electrically connected to the photoelectric conversion module, and configured to receive a first electrical signal, determine, on the basis of pre-calibrated correspondences between electrical signals and fluorescence intensities, a first fluorescence intensity corresponding to the first electrical signal, and determine, when the first fluorescence intensity is higher than a preset threshold, that the oil loading amount of the target current collector exceeds a first preset threshold.

Therefore, when the light source module emits light to irradiate the surface of the current collector, the oil stain molecules on the surface of the current collector will be excited to their high-energy state, the oil stain molecules will naturally transition to the initial state, and the remaining energy will be reflected in the form of light waves and received by the photoelectric conversion module and converted into an electrical signal, and then the processor can determine the fluorescence intensity based on the electrical signal, the more the oil stain, the greater the fluorescence intensity, so that in the case where the first fluorescence intensity of the target current collector is greater than the first preset threshold, it can be determined that the oil loading amount of the target current collector exceeds the second preset threshold. In this way, it is possible to accurately detect whether the oil loading amount of the current collector exceeds the standard.

In some embodiments, the system includes: a positioning module, electrically connected to the processor, and configured to collect an image of a surface of a target current collector, determine an irradiation position of a first light on the surface of the target current collector based on the image, and use the irradiation position as a target detection position; the processor is configured to determine a target fluorescence intensity at the target detection position of the target current collector based on the target electrical signal corresponding to the target detection position, and determine that the oil loading amount at the target detection position exceeds a second preset threshold in a case where the target fluorescence intensity is greater than a first preset threshold, the first electrical signal including the target electrical signal.

In this way, the specific position on the target current collector where the oil loading amount exceeds the second preset threshold can be determined by positioning the irradiation position of the first light, which is convenient to take corresponding measures for the position where the oil loading amount exceeds the second preset threshold subsequently.

In some embodiments, the system includes: a light filter configured to filter out light having a wavelength not meeting a preset condition from the light irradiated to the surface of the target current collector, and irradiate the first light obtained after filtering to the surface of the target current collector, wherein the preset condition includes that the wavelength is a preset wavelength.

In this way, the light filter can be provided to avoid the adverse effect of the interference light on the current collector detection, thereby improving the accuracy of the current collector detection.

In some embodiments, the light filter includes: a filter, a filtering parameter of the filter being determined based on a preset condition.

In this way, by determining the filtering parameter based on the preset condition, it is helpful to select a more appropriate filter, and more reliably avoid the adverse effect of the interference light on the current collector detection.

In some embodiments, the light source includes: a ultraviolet light source capable of reciprocating in a first direction, configured to emit ultraviolet light to irradiate a surface of a target current collector.

In this way, by irradiating the surface of the target current collector with ultraviolet light emitted by the ultraviolet light source, the oil stain molecules on the surface of the target current collector can be better excited to their high-energy state, so that they naturally transition to the initial state, so as to reflect the energy to the photoelectric conversion module in the form of light waves, thereby more reliably reflecting the oil loading amount of the current collector.

In a second aspect, the present application provides a current collector detection method, including: emitting a first light to irradiate a surface of a target current collector, so that the target current collector receives the first light, and reflecting a second light based on the first light, the target current collector being sprayed with oil stains, the target current collector moving along a second direction, the second direction intersecting the first direction; receiving the second light reflected by the target current collector, and converting the second light into a first electrical signal; receiving the first electrical signal, determining a first fluorescence intensity corresponding to the first electrical signal based on a pre-calibrated correspondence between electrical signals and fluorescence intensities, and determining that the oil loading amount of the target current collector exceeds the second preset threshold in a case where the first fluorescence intensity is greater than the first preset threshold.

Therefore, when the light source module emits light to irradiate the surface of the current collector, the oil stain molecules on the surface of the current collector will be excited to their high-energy state, the oil stain molecules will naturally transition to the initial state, and the remaining energy will be reflected in the form of light waves and received by the photoelectric conversion module and converted into an electrical signal, and then the processor can determine the fluorescence intensity based on the electrical signal, the more the oil stain, the greater the fluorescence intensity, so that in the case where the first fluorescence intensity of the target current collector is greater than the first preset threshold, it can be determined that the oil loading amount of the target current collector exceeds the second preset threshold. In this way, it is possible to accurately detect whether the oil loading amount of the current collector exceeds the standard.

In some embodiments, the method further includes: acquiring an image of a surface of a target current collector, determining an irradiation position of a first light on the surface of the target current collector based on the image, and using the irradiation position as a target detection position; and determining a target fluorescence intensity at the target detection position of the target current collector based on the target electrical signal corresponding to the target detection position, and determining that the oil loading amount at the target detection position exceeds a second preset threshold in a case where the target fluorescence intensity is greater than a first preset threshold, the first electrical signal including the target electrical signal.

In this way, the specific position on the target current collector where the oil loading amount exceeds the second preset threshold can be determined by positioning the irradiation position of the first light, which is convenient to take corresponding measures for the position where the oil loading amount exceeds the second preset threshold subsequently.

In some embodiments, the method further includes: and outputting warning information in a case where the first fluorescence intensity is greater than a first preset threshold, the warning information being configured to prompt a user that the oil loading amount of the target current collector exceeds a second preset threshold.

In this way, by outputting the warning information when the first fluorescence intensity of the target current collector is greater than the first preset threshold, the user can be reminded in time to take corresponding measures for control, thereby avoiding the waste caused by the production of a large number of current collectors with oil loading amounts exceeding the second preset threshold.

In some embodiments, the method further includes: and sending first feedback information to an oil spraying system in a case that the first fluorescence intensity is greater than a first preset threshold, so that the oil spraying system detects a temperature of sprayed oil stains based on the first feedback information, and adjusts the temperature to be within a first preset range in a case that the temperature exceeds the first preset range, where the first feedback information represents that an oil loading amount of the target current collector exceeds a second preset threshold.

In this way, through the above process, the first feedback information may be automatically sent to the oil spraying system in the case that the oil loading amount of the target current collector exceeds the second preset threshold, so that the oil spraying system automatically detects whether the temperature of the sprayed oil stain exceeds the first preset range, and automatically adjusts the temperature to the first preset range in the case that the temperature exceeds the first preset range, thereby avoiding the situation that the oil loading amount of the current collector still exceeds the second preset threshold subsequently, and thus avoiding the situation that a large number of current collectors with the oil loading amount exceeding the second preset threshold are produced, which is wasteful, and does not require manual adjustment, thereby saving labor cost.

In some embodiments, the method further includes: and sending second feedback information to the oil injection system in a case that the first fluorescence intensity is greater than a first preset threshold, so that the oil injection system determines a target oil injection nozzle with an abnormal oil injection amount from the plurality of oil injection nozzles based on a first position in the second feedback information, and adjusts the oil injection amount of the target oil injection nozzle to be within a second preset range, where the second feedback information represents that the oil loading amount at the first position of the target current collector exceeds the second preset threshold.

In this way, through the above process, the second feedback information may be automatically sent to the oil injection system in a case where the oil loading amount at the first position of the target current collector exceeds the second preset threshold, so that the oil injection system automatically detects the target oil injection nozzle with an abnormal oil loading amount of, and automatically adjusts the oil loading amount of the target oil injection nozzle to be within the second preset range, thereby avoiding the subsequent oil loading amount of the current collector still exceeding the second preset threshold, avoiding the production of a large number of current collectors with an oil loading amount of exceeding the second preset threshold, causing waste, and saving labor costs without manual adjustment.

In some embodiments, the method further includes: and in a case where a difference between the fluorescence intensity at the second position of the target current collector and the fluorescence intensity at the third position of the target current collector is greater than a third preset threshold, sending third feedback information to the oil injection system, so that the oil injection system adjusts the oil injection amounts of the plurality of oil injection nozzles of the oil injection system to the target oil injection amount based on the third feedback information, the target oil injection amount being within a second preset range, where the third feedback information represents that the oil supply amount of the target current collector is uneven.

In this way, through the above process, the third feedback information may be automatically sent to the oil injection system in the case that the oil loading amount of the target current collector is uneven, so that the oil injection system automatically adjusts the oil injection amounts of the plurality of oil injection nozzles to the same value, thereby avoiding the subsequent uneven oil loading amount of the current collector, avoiding the production of a large number of current collectors with uneven oil load, causing waste, and saving labor cost without manual adjustment.

In some embodiments, the method further includes: and in a case where the target fluorescence intensity is greater than the first preset threshold and the target detection position is located in the first preset region, sending fourth feedback information to the current collector slitting system, so that the current collector slitting system cuts off the first preset region in the target current collector based on the fourth feedback information, the first preset region including a preset head region and / or a preset tail region of the target current collector, where the fourth feedback information represents that the oil loading amount at the target detection position of the target current collector exceeds the second preset threshold.

In this way, through the above process, the target current collector can be automatically segmented based on the oil loading amount, without manual segmentation, which reduces labor cost, has high accuracy, and avoids waste caused by an excessively large cutting region.

In some embodiments, the method further includes: and in a case where the target fluorescence intensity is greater than the first preset threshold, sending fifth feedback information to the corona system, so that the corona system determines, based on a pre-calibrated correspondence between a fluorescence intensity and a corona parameter, a target corona parameter corresponding to the target fluorescence intensity included in the fifth feedback information, and adjusts the corona parameter for performing corona at the target detection position to the target corona parameter, where the fifth feedback information indicates that the oil loading amount at the target detection position of the target current collector exceeds the second preset threshold, and the fluorescence intensity at the target detection position is the target fluorescence intensity.

In this way, in the case where the oil loading amount at the target detection position of the target current collector is too large, the oil loading amount can be reduced by automatically adjusting the corona parameter, so that the target current collector is prevented from being a defective product, and no manual adjustment is required, thereby reducing the labor cost and improving the accuracy and timeliness.

In some embodiments, the method further includes: obtaining oil loading amounts and fluorescence intensities corresponding to a plurality of current collector samples with different cleanliness; fitting the oil loading amounts and the fluorescence intensities of the plurality of current collector samples to obtain a correspondence between the oil loading amount and the fluorescence intensity; determining a fluorescence intensity corresponding to a second preset threshold based on a correspondence between the oil loading amount and the fluorescence intensity; and determining the fluorescence intensity corresponding to the second preset threshold as the first preset threshold.

In this way, by fitting the oil loading amounts of the plurality of current collector samples with different cleanliness levels and the fluorescence intensities respectively corresponding to the oil loading amounts, the correspondence between the oil loading amount and the fluorescence intensity is obtained, and the fluorescence intensity corresponding to the second preset threshold is selected therefrom as the first preset threshold, the first preset threshold configured to determine whether the oil loading amount of exceeds the second preset threshold can be accurately calibrated, thereby realizing accurate detection of whether the oil loading amount of the current collector exceeds the standard.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### BRIEF DESCRIPTION OF THE DRAWINGS

Various other advantages and benefits will become clear to a person of ordinary skill in the art upon reading the detailed description of the preferred implementations below. The accompanying drawings are used only for the purpose of illustrating the preferred implementations and are not to be construed as limitations on the present application. Moreover, the same reference numerals are used to denote the same components throughout the accompanying drawings. In the accompanying drawings:
FIG. 1 is one schematic diagram of a structure of a current collector detection system according to some embodiments of the present application;
FIG. 2 is a schematic diagram of the mounting position of a light source module according to some embodiments of the present application;
FIG. 3 is the second schematic diagram of a structure of a current collector detection system according to some embodiments of the present application.
FIG. 4 is a schematic diagram of a current collector detection system according to some embodiments of the present application;
FIG. 5 is a flowchart of a current collector detection method according to some embodiments of the present application;
FIG. 6 is a schematic diagram of a scenario for calibrating preset thresholds according to some embodiments of the present application;
FIG. 7 is a curve diagram showing the relationship between oil layer thickness and fluorescence intensity according to some embodiments of the present application.

The figures are not necessarily drawn to the actual scale.

### DETAILED DESCRIPTION OF PREFERRED EMBODIMENTS

Embodiments of the technical solutions of the present application are described in detail below with reference to the drawings. The following embodiments are conceived to more clearly illustrate the technical solutions of the present application, and thus are used as examples only, and are not intended to limit the protection range of the present application.

Unless otherwise defined, all technical and scientific terms used herein have the same meaning as commonly understood by those skilled in the art to which the present application belongs. The terms used in the specification of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an internal communication between two elements or interaction between two elements. A person of ordinary skill in the art may understand the specific meanings of the above terms in the embodiments of the present application according to specific situations.

As described in the background art, the aluminum foil used in the positive electrode current collector of the lithium-ion battery is a rolled aluminum foil, and a large amount of rolling oil needs to be sprayed during the production process to prevent the aluminum foil from sticking to the roller, while functioning for cleaning and cooling. The rolling oil is composed of a base oil and a low-alcohol high-ester composite additive, wherein the esters are difficult to volatilize, and a small amount of rolling oil remains on the surface of the finished aluminum foil without oil removal processes such as annealing and cleaning. The manufacturing process of the aluminum foil determines that the residual oil loading amount on the surface is inevitable, but if the oil loading amount is too high, the problem of partial coating omission or point coating omission will occur when the surface of the aluminum foil is coated with carbon, which will lead to the poor welding of the tab, and the peeling of the prepared electrode sheet due to the insufficient bonding force between the cathode active material and the aluminum foil, causing the problems of short circuit and low capacity in the cell, and seriously affecting the performance of the battery.

In the related art, the surface energy of the aluminum foil is characterized by offline testing the dyne value. A dyne pen or dyne fluid is used to draw a line on the surface of the aluminum foil, and if not shrinking, the dyne value is used. The lower the dyne value, the higher the surface energy of the aluminum foil, the stronger the bonding between the active material and the surface of the aluminum foil, and the better the coating effect.

However, the high ester additive (6% - 10%) in the rolling oil will make the dyne value of the aluminum foil low, but the residual oil loading amount is large, so the aluminum foil meeting the dyne value specification cannot meet the requirements of no coating omission and no film peeling in actual production. At present, there is no reliable method to accurately detect whether the oil loading amount of the current collector exceeds the standard, and the oil loading amount of the current collector is in an uncontrolled state.

In view of the above technical problems, embodiments of the present application provide a current collector detection system and method, which includes: a light source module, provided at an outlet of a foil rolling mill, capable of reciprocating along a first direction, and configured to emit a first light, irradiate a surface of a target current collector, so that the target current collector receives the first light, and reflects a second light based on the first light, the target current collector is sprayed with oil stains, and the target current collector moves along a second direction, the second direction intersecting the first direction; a photoelectric conversion module, configured to receive the second light reflected by the target current collector and convert the second light into a first electrical signal; a processor, electrically connected to the photoelectric conversion module and configured to receive the first electrical signal, determine a first fluorescence intensity corresponding to the first electrical signal based on a pre-calibrated correspondence between electrical signals and fluorescence intensities, and determine that the oil loading amount of the target current collector exceeds a second preset threshold in a case where the first fluorescence intensity is greater than the first preset threshold.

Therefore, when the light source module emits light to irradiate the surface of the current collector, the oil stain molecules on the surface of the current collector will be excited to their high-energy state, the oil stain molecules will naturally transition to the initial state, and the remaining energy will be reflected in the form of light waves and received by the photoelectric conversion module and converted into an electrical signal, and then the processor can determine the fluorescence intensity based on the electrical signal, the more the oil stain, the greater the fluorescence intensity, so that in the case where the first fluorescence intensity of the target current collector is greater than the first preset threshold, it can be determined that the oil loading amount of the target current collector exceeds the second preset threshold. In this way, it is possible to accurately detect whether the oil loading amount of the current collector exceeds the standard.

The following describes in detail a current collector detection system and method provided in the embodiments of this application.

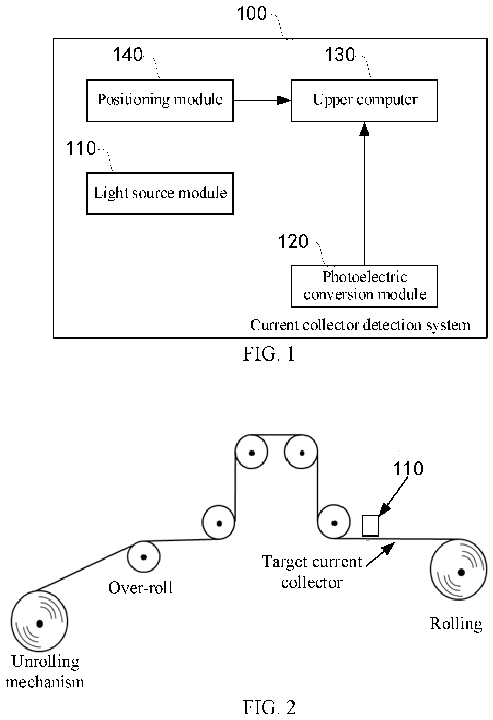

FIG. 1 is a schematic diagram of a structure of a current collector detection system according to some embodiments of the present application;

As shown in FIG. 1, the current collector detection system 100 may include: a light source module 110, a photoelectric conversion module 120, and a processor 130.

The light source module 110 may be disposed at an outlet of the foil rolling mill and reciprocate along a first direction, and may be configured to emit a first light to irradiate a surface of the target current collector, so that the target current collector receives the first light and reflects a second light based on the first light, the target current collector is sprayed with oil stains, and the target current collector may move along a second direction, and the second direction may intersect the first direction.

The photoelectric conversion module 120 may be configured to receive the second light reflected by the target current collector and convert the second light into a first electrical signal.

The processor 130 may be electrically connected to the photoelectric conversion module 120, and may be configured to receive the first electrical signal, determine a first fluorescence intensity corresponding to the first electrical signal based on a pre-calibrated correspondence between electrical signals and fluorescence intensities, and determine that the oil loading amount of the target current collector exceeds a second preset threshold in a case where the first fluorescence intensity is greater than the first preset threshold.

Here, the target current collector may be a positive electrode current collector of a lithium-ion battery. For example, the target current collector may be aluminum foil.

The surface of the target current collector may be a side of the target current collector that has been sprayed with oil and needs to be coated with carbon.

The first direction may be a width direction of the target current collector. The target current collector may be located on the conveying assembly, and the second direction may be a foil traveling direction of the conveying assembly. For example, the first direction may be perpendicular to the second direction.

For example, the light source module 110 may be installed at a thickness gauge at an outlet of the foil rolling mill, and a distance between the light source module 110 and the surface of the aluminum foil may be adjusted, for example, to 4.7 mm. The light source module 110 may move back and forth in the width direction of the aluminum foil, perpendicular to the foil traveling direction, so as to detect whether the oil loading amount exceeds the standard in the entire width range of the entire roll of aluminum foil.

For example, the trajectory of the first light on the surface of the target current collector may be Z-shaped, wave-shaped and/or oblique linear. The light source module 110 may move back and forth perpendicular to the foil traveling direction to form Z-shaped, wave-shaped and/or oblique linear trajectory. The Z-shaped trajectory has a long detection path and a larger detection range, and can more comprehensively and accurately detect whether the oil loading amount of the current collector exceeds the standard, which is suitable for a scenario in which the monitoring of the oil loading amount is relatively strict. The wave-shaped and oblique linear trajectories have a smaller detection range and a high detection efficiency, and are suitable for scenarios with high efficiency requirements.

For example, the installation position of the light source module 110 may be as shown in FIG. 2.

The photoelectric conversion module 120 may be a photodiode, and the photodiode may convert a received optical signal (that is, the second light) into an electrical signal. The electrical signal may include a current signal and / or a voltage signal.

The photoelectric conversion module 120 may send the first electrical signal to the processor 130, and then the processor 130 may determine the first fluorescence intensity of the target current collector based on the first electrical signal, and determine that the oil loading amount of the target current collector exceeds the second preset threshold in a case where the first fluorescence intensity is greater than the first preset threshold.

The processor 130 may be a host computer, or may be a microcontroller unit (MCU).

Specifically, the processor 130 may pre-acquire the electrical signals corresponding to the plurality of current collector samples and the fluorescence intensities respectively corresponding to the electrical signals, fit the fluorescence intensities respectively corresponding to the plurality of electrical signals to obtain the correspondence between the electrical signal and the fluorescence intensity, and store the correspondence between the electrical signal and the fluorescence intensity. Then, when the current collector detection is performed, the first fluorescence intensity corresponding to the received first electrical signal may be determined based on the correspondence between the electrical signal and the fluorescence intensity.

The processor 130 may also display the first fluorescence intensity of the target current collector.

The fluorescence intensity may be a relative fluorescence unit (RFU) value.

The fluorescence intensity may be positively correlated with the oil loading amount.

If the first fluorescence intensity is greater than the first preset threshold, it may be determined that the oil loading amount of the target current collector exceeds the second preset threshold. If the first fluorescence intensity is less than or equal to the first preset threshold, it can be determined that the oil loading amount of the target current collector does not exceed the second preset threshold.

The first preset threshold may be set according to actual needs. For example, the first preset threshold may be pre-calibrated.

The second preset threshold may be set according to actual needs.

For example, the first preset threshold may be 10 RFU. If the first fluorescence intensity is greater than 10 RFU, it may be determined that the oil loading amount of the target current collector exceeds the second preset threshold. If the first fluorescence intensity is less than or equal to 10 RFU, it can be determined that the oil loading amount of the target current collector does not exceed the second preset threshold.

In some embodiments of the present application, the light source module 110 may include: an ultraviolet (UV) light source.

The UV light source may reciprocate in a first direction and may be configured to emit UV light to irradiate a surface of a target current collector.

Here, the target current collector surface may be irradiated with short-wave UV rays.

For example, the UV light source may emit UV light with a wavelength of 360 nm to irradiate the surface of the aluminum foil.

In this way, by irradiating the surface of the target current collector with the UV light emitted by the UV light source, the oil stain molecules on the surface of the target current collector can be better excited to their high-energy state, so that they naturally transition to the initial state, so as to reflect the energy to the photoelectric conversion module in the form of light waves, thereby more reliably reflecting the oil loading amount of the current collector.

Therefore, when the light source module emits light to irradiate the surface of the current collector, the oil stain molecules on the surface of the current collector will be excited to their high-energy state, the oil stain molecules will naturally transition to the initial state, and the remaining energy will be reflected in the form of light waves and received by the photoelectric conversion module and converted into an electrical signal, and then the processor can determine the fluorescence intensity based on the electrical signal, the more the oil stain, the greater the fluorescence intensity, so that in the case where the first fluorescence intensity of the target current collector is greater than the first preset threshold, it can be determined that the oil loading amount of the target current collector exceeds the second preset threshold. In this way, it is possible to accurately detect whether the oil loading amount of the current collector exceeds the standard.

In the related art, the dyne value is tested offline to characterize the surface energy of the aluminum foil, but this method has deviated from the standard requirements for the oil loading amount of the aluminum foil in the actual production process, which belongs to offline detection, has hysteresis, the oil loading amount on the surface of the aluminum foil is not controlled, and when abnormal fluctuations such as excessive and uneven spraying of rolling oil occur in the production process, the problems cannot be identified in time, and when the rear end finds, a large amount of products with too high oil loading have been produced, which causes a great risk of flowing downstream and also causes a large cost loss.

The current collector detection system provided by the embodiments of the present application can realize online detection of whether the oil loading amount of the current collector exceeds the standard, and when the oil loading amount of the current collector exceeds the standard, it can be found in time, thereby avoiding a large number of defective products, which cause great risks when flowing downstream, and also avoiding cost loss. Moreover, the current collector detection system provided by the embodiments of the present application is easy to install, belongs to non-contact and non-destructive measurement, and can achieve the purpose of online quantitative monitoring and improve the detection capability of the oil quantity.

According to some embodiments of the present application, as shown in FIG. 1, the current collector detection system 100 may further include: a positioning module 140.

The positioning module 140 may be electrically connected to the processor 130 and may be configured to acquire an image of a surface of a target current collector, determine an irradiation position of the first light on the surface of the target current collector based on the image, and use the irradiation position as a target detection position.

The processor 130 may be configured to determine a target fluorescence intensity at the target detection position of the target current collector based on the target electrical signal corresponding to the target detection position, and determine that the oil loading amount at the target detection position exceeds a second preset threshold in a case where the target fluorescence intensity is greater than the first preset threshold.

Here, the positioning module 140 may include a camera and a positioning unit, the camera may be electrically connected to the positioning unit, the camera may be configured to collect an image of the surface of the target current collector, when the first light is irradiated to the surface of the target current collector, the image collected by the camera may display an irradiation position of the first light, and after the camera sends the image to the positioning unit, the positioning unit may determine the irradiation position of the first light on the surface of the target current collector based on the image, and use the irradiation position as the target detection position.

The target detection position may be an irradiation position of the first light on the surface of the target current collector. The first light may be irradiated to any position of the surface of the target current collector. For example, the target detection position may be a coordinate of an irradiation position of the first light on the surface of the target current collector.

For example, the light irradiation position in the image may be detected by the target detection model to determine the target detection position.

The processor 130 may determine the target fluorescence intensity corresponding to the target detection position of the target current collector based on the target electrical signal corresponding to the target detection position. The first electrical signal may include the target electrical signal. The first electrical signal may include a plurality of electrical signals, and the target electrical signal may be one of the plurality of electrical signals.

There may also be a plurality of target electrical signals. The processor 130 may determine the target fluorescence intensities respectively corresponding to the plurality of target detection positions of the target current collector based on the target electrical signals respectively corresponding to the plurality of target detection positions.

The processor 130 may further display the target fluorescence intensities at the plurality of target detection positions of the target current collector.

For example, the target fluorescence intensities at the plurality of target detection positions of the target current collector may be displayed by images, wherein the abscissa may be the coordinate of the target detection position in the width direction of the target current collector, the ordinate may be the coordinate of the target detection position in the length direction of the target current collector, and the target fluorescence intensities at different target detection positions may be represented by different colors.

In this way, the specific position on the target current collector where the oil loading amount exceeds the second preset threshold can be determined by positioning the irradiation position of the first light, which is convenient to take corresponding measures for the position where the oil loading amount exceeds the second preset threshold subsequently.

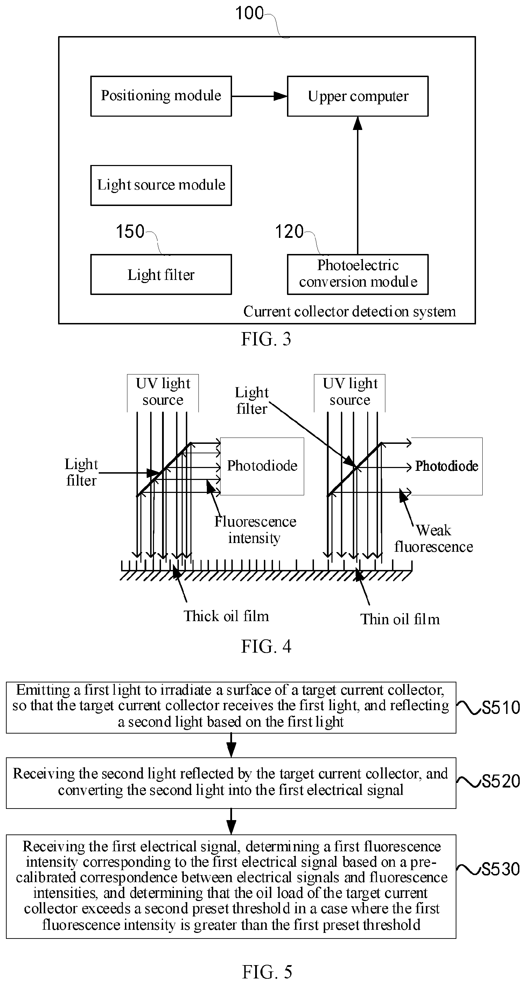

According to some embodiments of the present application, as shown in FIG. 3, the current collector detection system 100 may further include: a light filter 150.

The light filter 150 may be configured to filter out light having a wavelength that does not satisfy a preset condition from the light irradiated to the surface of the target current collector, and irradiate the first light obtained after filtering to the surface of the target current collector.

Here, the light irradiated to the surface of the target current collector may include other light in addition to the first light emitted by the light source module, for example: natural light and / or light from other light sources. Other light irradiating the surface of the target current collector may interfere with the current collector detection. Therefore, in order to avoid interference with the current collector detection, the interference light may be filtered out from the light irradiated to the target current collector surface.

Specifically, the first light and the interference light may be distinguished by wavelength. The preset condition may include that the wavelength is a preset wavelength, and the preset wavelength may be a wavelength of the first light emitted by the light source module.

For example, the wavelength of the first light emitted by the light source module is 360 nm, and the light filter 150 may filter out light having a wavelength other than 360 nm from the light irradiated to the surface of the target current collector, so that the first light having a wavelength of 360 nm may be obtained, and the first light is irradiated to the surface of the target current collector.

In addition, the light filter 150 may be further configured to reflect the second light reflected by the surface of the target current collector to the photoelectric conversion module 120.

In this way, the light filter can be provided to avoid the adverse effect of the interference light on the current collector detection, thereby improving the accuracy of the current collector detection.

In some embodiments of the present application, the light filter includes: a filter.

The filtering parameter of the filter may be determined based on a preset condition.

Here, the filtering parameter may refer to a wavelength of light that can be filtered out or a wavelength of light that can be retained by the filter.

For example, the wavelength of the light that can be filtered out by the filter may be greater than or less than 360 nm, and the wavelength of the light that can be retained by the filter may be equal to 360 nm.

In this way, by determining the filtering parameter based on the preset condition, it is helpful to select a more appropriate filter, and more reliably avoid the adverse effect of the interference light on the current collector detection.

In some examples, the principle of the current collector detection system may be as shown in FIG. 4, the UV light source emits UV light, the UV light passes through the light filter and then irradiates the surface of the target current collector, and the light reflected by the surface of the target current collector is reflected to the photodiode through the light filter. If the oil film on the surface of the target current collector is thick (that is, the oil loading amount exceeds the preset oil loading amount threshold), the fluorescence reflected to the photodiode is strong (that is, the fluorescence intensity is large); If the oil film on the surface of the target current collector is thin (that is, the oil loading amount does not exceed the preset oil loading amount threshold), the fluorescence reflected to the photodiode is weak (that is, the fluorescence intensity is small).

In some examples, the current collector detection system may have a measurement range of 0 to 2000 RFU, an excitation wavelength of 360 to 365 nm, a maximum power of 150 mW, and a measurement distance of 4.7 mm.

The current collector detection system provided by the embodiments of the present application can not only realize online detection, but also support portable offline detection, and can also be integrated in an automatic detection box test bench.

The embodiment of the present application further provides a method for detecting a current collector, and the method for detecting a current collector may be performed by the current collector detection system shown in any of the above embodiments, and the method for detecting a current collector provided by the embodiment of the present application will be introduced below.

FIG. 5 is a schematic flowchart of a current collector detection method according to some embodiments of the present application;

As shown in FIG. 5, the current collector detection method may include the following steps:
S510, emitting a first light to irradiate a surface of a target current collector, so that the target current collector receives the first light and reflects a second light based on the first light.
S520, receiving the second light reflected by the target current collector, and converting the second light into a first electrical signal.
S530, receiving the first electrical signal, determining the first fluorescence intensity corresponding to the first electrical signal based on the pre-calibrated correspondence between electrical signals and fluorescence intensities, and determining that the oil loading of the target current collector exceeds the second preset threshold in a case where the first fluorescence intensity is greater than the first preset threshold.

The target current collector may be sprayed with oil stains.

For a specific process of S510 to S530, refer to the foregoing embodiment, and details are not described herein again.

Therefore, when the light source module emits light to irradiate the surface of the current collector, the oil stain molecules on the surface of the current collector will be excited to their high-energy state, the oil stain molecules will naturally transition to the initial state, and the remaining energy will be reflected in the form of light waves and received by the photoelectric conversion module and converted into an electrical signal, and then the processor can determine the fluorescence intensity based on the electrical signal, the more the oil stain, the greater the fluorescence intensity, so that in the case where the first fluorescence intensity of the target current collector is greater than the first preset threshold, it can be determined that the oil loading amount of the target current collector exceeds the second preset threshold. In this way, it is possible to accurately detect whether the oil loading amount of the current collector exceeds the standard.

In some embodiments of the present application, the method includes:
acquiring an image of a surface of a target current collector, determining an irradiation position of a first light on the surface of the target current collector based on the image, and using the irradiation position as a target detection position;
and determining a target fluorescence intensity at the target detection position of the target current collector based on the target electrical signal corresponding to the target detection position, and determining that the oil loading amount at the target detection position exceeds a second preset threshold in a case where the target fluorescence intensity is greater than a first preset threshold, the first electrical signal including the target electrical signal.

Here, the specific process may refer to the above embodiments, and will not be repeated here.

In this way, the specific position on the target current collector where the oil loading amount exceeds the second preset threshold can be determined by positioning the irradiation position of the first light, which is convenient to take corresponding measures for the position where the oil loading amount exceeds the second preset threshold subsequently.

In some embodiments of the present application, after the first fluorescence intensity corresponding to the first electrical signal is determined based on the pre-calibrated correspondence between electrical signals and fluorescence intensities, the method may further include:
outputting warning information in a case that the first fluorescence intensity is greater than a first preset threshold.

Here, the warning information may be configured to prompt the user that the oil loading amount of the target current collector exceeds the second preset threshold.

Specifically, the first fluorescence intensity of the target current collector being greater than the first preset threshold may represent that the oil loading amount of the target current collector exceeds the second preset threshold, and therefore, the warning information may be output to prompt the user that the oil loading amount of the target current collector exceeds the second preset threshold, so that the user takes corresponding measures to control. For example, the user may adjust the fuel injection parameter of the fuel injection system to prevent the oil loading amount of the current collector from still exceeding the second preset threshold subsequently.

For example, the output manner of the warning information may include at least one of text, pattern, sound and vibration.

In this way, by outputting the warning information when the first fluorescence intensity of the target current collector is greater than the first preset threshold, the user can be reminded in time to take corresponding measures for control, thereby avoiding the waste caused by the production of a large number of current collectors with oil loading amounts exceeding the second preset threshold.

In some embodiments of the present application, after the first fluorescence intensity corresponding to the first electrical signal is determined based on the pre-calibrated correspondence between electrical signals and fluorescence intensities, the method may further include:

In a case where the first fluorescence intensity is greater than the first preset threshold, the first feedback information is sent to the oil spraying system, so that the oil spraying system detects the temperature of the sprayed oil stain based on the first feedback information, and adjusts the temperature to be within the first preset range in a case where the temperature exceeds the first preset range.

Here, the first feedback information may represent that the oil loading amount of the target current collector exceeds the second preset threshold.

The reason that the oil loading amount of the target current collector exceeds the second preset threshold may include that the temperature of the oil sprayed by the oil spraying system is too high.

Specifically, the first fluorescence intensity of the target current collector being greater than the first preset threshold may represent that the oil loading amount of the target current collector exceeds the second preset threshold, and therefore, the first feedback information may be automatically sent to the oil spraying system, so that the oil spraying system automatically detects the temperature of the oil stain sprayed by itself, determines whether the temperature exceeds the preset range, and if yes, the temperature may be adjusted to be within the first preset range to reduce the oil loading amount of the target current collector, and if no, the temperature may not be adjusted.

For example, the first feedback information may be sent to the main operator console controller of the rolling mill in the oil spraying system.

The first preset range can be set according to actual needs, specifically, the oil loading amount of detection may be performed on the current collector sprayed with oil stains of different temperatures in advance, and the temperature range corresponding to the current collector with the oil loading amount of not exceeding the second preset threshold is used as the first preset range. For example, the first preset range may be 30 °C to 45 °C.

In this way, through the above process, the first feedback information may be automatically sent to the oil spraying system in the case that the oil loading amount of the target current collector exceeds the second preset threshold, so that the oil spraying system automatically detects whether the temperature of the sprayed oil stain exceeds the first preset range, and automatically adjusts the temperature to the first preset range in the case that the temperature exceeds the first preset range, thereby avoiding the situation that the oil loading amount of the current collector still exceeds the second preset threshold subsequently, and thus avoiding the situation that a large number of current collectors with the oil loading amount exceeding the second preset threshold are produced, which is wasteful, and does not require manual adjustment, thereby saving labor cost.

In some embodiments of the present application, after the first fluorescence intensity corresponding to the first electrical signal is determined based on the pre-calibrated correspondence between electrical signals and fluorescence intensities, the method may further include:
sending second feedback information to the oil injection system in a case that the first fluorescence intensity is greater than a first preset threshold, so that the oil injection system determines, from the plurality of oil injection nozzles based on a first position in the second feedback information, a target oil injection nozzle with an abnormal oil injection amount, and adjusts the oil injection amount of the target oil injection nozzle to be within a second preset range.

Here, the second feedback information may represent that the oil loading amount at the first position of the target current collector exceeds the second preset threshold.

The first position may be a position on the target current collector where the oil loading amount exceeds a second preset threshold.

The reason that the oil loading amount at the first position exceeds the second preset threshold may include that the oil injection amount of the oil injection nozzle spraying oil stain at the first position is abnormal.

Therefore, the target oil injection nozzle with the abnormal oil injection amount may be determined from the plurality of oil injection nozzles based on the first position, and then the oil injection amount of the target oil injection nozzle is adjusted to be within the normal oil injection amount range.

The second preset range may be a normal range of the fuel injection amount, which may be specifically set according to actual needs.

Specifically, oil spray nozzles with different oil spray amounts may be used in advance to spray oil stain to the current collector, and an oil spray amount range corresponding to the current collector with an oil loading amount not exceeding the second preset threshold is used as the second preset range. For example, the second preset range may be 1000cm3/min to 1500cm3/min.

In some examples, in the case where the temperature of the oil stain is 30 °C to 45 °C, the correspondence between the RFU value and cleanliness of the current collector and the oil injection amount range may be as shown in Table 1.

**Table 1-Table of Injection Amount Range Data**

| RFU value | RFU<8 | RFU: 8-10 | RFU: 10-12 | RFU>12 |
|---|---|---|---|---|
| Cleanliness | 98% | 95~98% | 92~95% | 92% |

| Injection amount range | 1000 to 1500 cm ³ / min | 1500 to 2000 cm ³ / min | 2000 to 2600 cm ³ / min | >2600cm³/min |
|---|---|---|---|---|
| temperature: | 30-45°C | 30-45°C | 30-45°C | 30-45°C |

In this way, through the above process, the second feedback information may be automatically sent to the oil injection system in a case where the oil loading amount at the first position of the target current collector exceeds the second preset threshold, so that the oil injection system automatically detects the target oil injection nozzle with an abnormal oil loading amount of, and automatically adjusts the oil loading amount of the target oil injection nozzle to be within the second preset range, thereby avoiding the subsequent oil loading amount of the current collector still exceeding the second preset threshold, avoiding the production of a large number of current collectors with an oil loading amount of exceeding the second preset threshold, causing waste, and saving labor costs without manual adjustment.

In some embodiments of the present application, after the first fluorescence intensity corresponding to the first electrical signal is determined based on the pre-calibrated correspondence between electrical signals and fluorescence intensities, the method may further include:

in a case where a difference between the fluorescence intensity at the second position of the target current collector and the fluorescence intensity at the third position of the target current collector is greater than a third preset threshold, sending third feedback information to the oil injection system, so that the oil injection system adjusts the oil injection amounts of the plurality of oil injection nozzles of the oil injection system to the target oil injection amount based on the third feedback information.

Here, the third feedback information may represent that the oil loading amount of the target current collector is uneven.

The second position may be any position on the target current collector, and the third position may be any position on the target current collector other than the second position.

The third preset threshold may be set according to actual needs.

The difference between the fluorescence intensity at the second position and the fluorescence intensity at the third position being greater than the third preset threshold may indicate that the oil loading amount at the second position of the target current collector is greatly different from the oil loading amount at the third position, and the oil loading amount of the target current collector is uneven.

The reason for the uneven oil loading amount of the target current collector may include that the oil injection amounts of the plurality of oil injection nozzles of the oil injection system are inconsistent or have a large difference.

Therefore, the problem of uneven oil carrying capacity of the target current collector can be solved by adjusting the oil injection amounts of the plurality of oil injection nozzles of the oil injection system to the target oil injection amount. The target fuel injection amount may be within a second preset range.

In this way, through the above process, the third feedback information may be automatically sent to the oil injection system in the case that the oil loading amount of the target current collector is uneven, so that the oil injection system automatically adjusts the oil injection amounts of the plurality of oil injection nozzles to the same value, thereby avoiding the subsequent uneven oil loading amount of the current collector, avoiding the production of a large number of current collectors with uneven oil load, causing waste, and saving labor cost without manual adjustment.

In some embodiments of the present application, after the target fluorescence intensity of the target detection position of the target current collector is determined based on the target electrical signal corresponding to the target detection position, the method may further include:
in a case where the target fluorescence intensity is greater than the first preset threshold and the target detection position is located in the first preset region, sending fourth feedback information to the current collector slitting system, so that the current collector slitting system cuts off the first preset region in the target current collector based on the fourth feedback information.

Here, the first preset region may include a preset head region and / or a preset tail region of the target current collector. The fourth feedback information may represent that the oil loading amount at the target detection position of the target current collector exceeds the second preset threshold.

Specifically, if the target detection position with the target fluorescence intensity greater than the first preset threshold is located in the preset head region and / or the preset tail region, the fourth feedback information may be sent to the current collector slitting system, so that the current collector slitting system cuts off the preset head region and / or the preset tail region in the target current collector.

Both the preset head region and the preset tail region may be set according to actual needs, and specifically, the preset head region and the preset tail region may be determined based on the length of the target current collector that needs to be retained.

The slitting system may be configured to perform a slitting process, and the slitting process may be a process of roughly cutting the current collector. For example, the slitting system may slit a large current collector roll of 30000m * 1.5m into four small current collector rolls of 15000m * (600 to 750) mm, the preset head region of the small current collector roll may be a region of 100m from the head in the length direction, the preset tail region may be a region of 100m from the tail in the length direction, if the oil loading amount of the head 100m region of the small current collector roll exceeds the standard, the slitting system may cut off the head 100m region, and if the oil loading amount of the tail 100m region of the small current collector roll exceeds the standard, the slitting system may cut off the tail 100m region.

In this way, through the above process, the target current collector can be automatically segmented based on the oil loading amount, without manual segmentation, which reduces labor cost, has high accuracy, and avoids waste caused by an excessively large cutting region.

In some embodiments of the present application, after the target fluorescence intensity of the target detection position of the target current collector is determined based on the target electrical signal corresponding to the target detection position, the method may further include:
in a case where the target fluorescence intensity is greater than the first preset threshold, sending fifth feedback information to the corona system, so that the corona system determines, based on a pre-calibrated correspondence between fluorescence intensity and a corona parameter, a target corona parameter corresponding to the target fluorescence intensity included in the fifth feedback information, and adjusts the corona parameter for performing corona at the target detection position to the target corona parameter.

Here, the fifth feedback information may represent that the oil loading amount at the target detection position of the target current collector exceeds the second preset threshold, and the fluorescence intensity at the target detection position is the target fluorescence intensity.

The corona can polarize the oil stains on the surface of the current collector, and the oil molecules are broken and volatilized, so that the adhesion of the surface of the current collector can be greatly improved.

Therefore, for the target detection position where the oil loading amount exceeds the second preset threshold, the oil loading amount may be reduced by corona.

The specific corona parameter at the target detection position, that is, the target corona parameter, may be determined based on the target fluorescence intensity.

Specifically, the correspondence between the fluorescence intensity and the corona parameter may be obtained by fitting a plurality of fluorescence intensities and corona parameters corresponding to the fluorescence intensities in advance, wherein the corona parameter corresponding to the fluorescence intensity may mean that the current collector with the fluorescence intensity needs to perform corona by using the corona parameter corresponding to the current collector, so that the oil loading amount of the current collector does not exceed the second preset threshold.

The corona parameter may include at least one of corona times, corona power, corona speed, corona voltage characteristic, and corona voltage value. For example, the corona times may be two, the corona power may be 50 kW to 60 kW, the corona speed may be 90m/min to 120m/min, the corona voltage characteristic may be a high-frequency alternating current, and the corona voltage value may be 5000V/m2 to 15000V/m2.

In this way, in the case where the oil loading amount at the target detection position of the target current collector is too large, the oil loading amount can be reduced by automatically adjusting the corona parameter, so that the target current collector is prevented from being a defective product, and no manual adjustment is required, thereby reducing the labor cost and improving the accuracy and timeliness.

In some embodiments of the present application, in a case where the target fluorescence intensity is greater than the first preset threshold and the target detection position is located in the second preset region, the fifth feedback information is sent to the corona system, so that the corona system determines, based on a pre-calibrated correspondence between fluorescence intensity and corona parameter, a target corona parameter corresponding to the target fluorescence intensity included in the fifth feedback information, and adjusts the corona parameter for performing corona at the target detection position to the target corona parameter.

The second preset region may be a region of the target current collector that is retained after the fine cutting process. The second preset region may be a region that cannot be cut off.

Here, the fine cutting process may be performed after the slitting process, and the fine cutting process may be performed on the small current collector roll obtained by slitting, so that the length and width of the current collector meet the requirements of the finished size, and the end face of the current collector is free of burrs and aluminum powder, the plate shape is good, and the oil loading amount meets the specification requirements.

The target fluorescence intensity being greater than the first preset threshold and the target detection position being located in the second preset region may represent that there is still a position with an oil loading amount exceeding the standard in the target current collector retained after the fine cutting process, that is, the target detection position, and since the region retained after the fine cutting process cannot be cut off, the oil loading amount at the target detection position may be reduced by corona. The method for determining the corona parameter may refer to the above embodiments.

The corona may be performed during the fine cutting process.

In this way, in the case where the oil loading amount in the non-cuttable region of the target current collector is too large, the oil loading amount can be reduced by automatically adjusting the corona parameter, so that the target current collector is prevented from being a defective product, and no manual adjustment is required, thereby reducing labor costs and improving accuracy and timeliness.

In some embodiments of the present application, before S530, the method may further include:
obtaining oil loading amounts and fluorescence intensities corresponding to a plurality of current collector samples with different cleanliness;
fitting the oil loading amounts and the fluorescence intensities of the plurality of current collector samples to obtain a correspondence between the oil loading amount and the fluorescence intensity;
determining a fluorescence intensity corresponding to a second preset threshold based on a correspondence between the oil loading amount and the fluorescence intensity;
and determining the fluorescence intensity corresponding to the second preset threshold as the first preset threshold.

Here, the cleanliness of the current collector sample may be positively correlated with the carbon coating effect, and the cleanliness may also be negatively correlated with the oil loading amount. The carbon coating effect may include normal carbon coating and coating omission.

For example, the cleanliness of the current collector sample may be represented by a percentage. The amount of oil loading amount can be expressed by the thickness of the oil layer. The second preset threshold may be a preset oil layer thickness threshold.

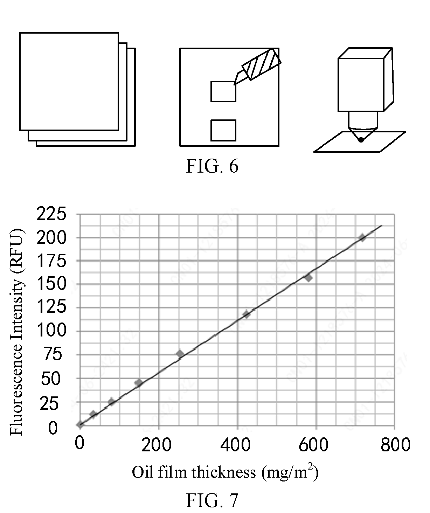

For example, as shown in FIG. 6, aluminum foils with cleanliness of 80%, 85%, 90%, 95% and 100% may be collected, and samples are cut in the middle area of each aluminum foil with a cutter, taking care not to contaminate the surface of the sampled sample, keeping the surface of the aluminum foil flat, placing the light source module vertically, and detecting at a distance of 4.7 mm from the aluminum foil, and recording the fluorescence intensity. Here, the distance between the light source module and the aluminum foil may be maintained to be consistent with the distance between the light source module and the target current collector in the current collector detection.

Through the above process, the fluorescence intensities corresponding to a plurality of aluminum foils with different cleanliness can be obtained. In addition, the oil loading amounts corresponding to the plurality of aluminum foils with different cleanliness may be acquired. The oil loading amount and fluorescence intensity of the same aluminum foil are recorded in association with each other, and then the plurality of oil loading amounts and the corresponding fluorescence intensities may be fitted to obtain the correspondence between the oil loading amount and the fluorescence intensity.

For example, the correspondence between the oil loading amount and the fluorescence intensity may be a curve, a formula or a table. The correspondence between the oil layer thickness and the fluorescence intensity may be as shown in FIG. 7.

Then, the fluorescence intensity corresponding to the second preset threshold may be searched from the correspondence between the oil loading amount and the fluorescence intensity, and the fluorescence intensity corresponding to the second preset threshold is used as the first preset threshold. If the oil loading amount exceeds the second preset threshold, coating omission will occur to carbon coating, and if the oil loading amount does not exceed the second preset threshold, coating omission will not occur.

For example, the first preset threshold may be 10 RFU. The fluorescence intensity corresponding to the oil loading amount not exceeding the second preset threshold is less than or equal to 10 RFU, so the oil loading amount of the current collector with the fluorescence intensity less than or equal to 10 RFU does not exceed the second preset threshold; The fluorescence intensity corresponding to the oil loading amount exceeding the second preset threshold is greater than 10 RFU, so the oil loading amount of the current collector with the fluorescence intensity greater than 10 RFU exceeds the second preset amount threshold.

In this way, by fitting the oil loading amounts of the plurality of current collector samples with different cleanliness levels and the fluorescence intensities respectively corresponding to the oil loading amounts, the correspondence between the oil loading amount and the fluorescence intensity is obtained, and the fluorescence intensity corresponding to the second preset threshold is selected therefrom as the first preset threshold, the first preset threshold configured to determine whether the oil loading amount of exceeds the second preset threshold can be accurately calibrated, thereby realizing accurate detection of whether the oil loading amount of the current collector exceeds the standard.

Although the present application has been described with reference to some preferred embodiments, various modifications to the present application and replacements of the components therein with equivalents can be made without departing from the scope of the present application. In particular, the technical features mentioned in the embodiments may be combined in any manner provided that there is no structural conflict. The present application is not limited to the specific embodiments disclosed herein, but includes all technical solutions falling within the scope of the claims.

## Claims

1. A current collector detection system, comprising:
a light source module (110), arranged at an outlet of a foil rolling mill, capable of reciprocating in a first direction, and configured to emit first light to irradiate the surface of a target current collector, such that the target current collector receives the first light and reflects a second light based on the first light, the target current collector being sprayed with oil stains, and the target current collector moving in a second direction, and the second direction intersecting the first direction;
a photoelectric conversion module (120), configured to receive the second light reflected by the target current collector and convert the second light into a first electrical signal;
a processor, electrically connected to the photoelectric conversion module (120), and configured to receive the first electrical signal, determine, on the basis of pre-calibrated correspondences between electrical signals and fluorescence intensities, a first fluorescence intensity corresponding to the first electrical signal, and determine, when the first fluorescence intensity is higher than a first preset threshold, that the oil loading amount of the target current collector exceeds a second preset threshold.

2. The system according to claim 1, further comprising:
a positioning module (140), electrically connected to the processor, and configured to acquire an image of a surface of a target current collector, determine an irradiation position of the first light on the surface of the target current collector based on the image, and use the irradiation position as a target detection position,
wherein the processor is configured to determine a target fluorescence intensity at the target detection position of the target current collector based on a target electrical signal corresponding to the target detection position, and determine that the oil loading amount at the target detection position exceeds the second preset threshold in a case that the target fluorescence intensity is greater than the first preset threshold, the first electrical signal comprising the target electrical signal.

3. The system according to claim 2, wherein the positioning module (140) comprises a camera and a positioning unit, the camera is electrically connected to the positioning unit, the camera is configured to collect an image of the surface of the target current collector, when the first light is irradiated to the surface of the target current collector, the image collected by the camera shows an irradiation position of the first light, and after the camera sends the image to the positioning unit, the positioning unit is configured to determine the irradiation position of the first light on the surface of the target current collector based on the image, and use the irradiation position as the target detection position.

4. The system according to claim 2 or 3, wherein the processor is further configured to display target fluorescence intensities at a plurality of target detection positions of the target current collector, wherein the target fluorescence intensities of the plurality of target detection positions of the target current collector are displayed by an image, the abscissa in the image is the coordinate of the target detection position in the width direction of the target current collector, the ordinate in the image is the coordinate of the target detection position in the length direction of the target current collector, and the target fluorescence intensities at different target detection positions are represented by different colors.

5. The system according to claim 1, further comprising:
a light filter, configured to filter out light having a wavelength not meeting a preset condition from the light irradiated to the surface of the target current collector, and irradiate the first light obtained after filtering to the surface of the target current collector, wherein the preset condition comprises that the wavelength is a preset wavelength.

6. The system according to claim 5, wherein the light filter is further configured to reflect the second light reflected by the surface of the target current collector to the photoelectric conversion module (120).

7. The system according to claim 5, wherein the light filter comprises:
a filter, the filtering parameters of the filter being determined based on the preset conditions.

8. The system according to claim 1, wherein the light source module (110) comprises:
an ultraviolet light source that reciprocates along the first direction and is configured to emit ultraviolet light to irradiate the surface of the target current collector.

9. The system according to claim 1, wherein the target current collector is a positive electrode current collector of a lithium-ion battery, and the surface of the target current collector is a side of the target current collector that has been sprayed with oil and needs to be coated with carbon.

10. The system according to claim 1, wherein the first direction is a width direction of the target current collector; the target current collector is located on a conveying assembly, and the second direction is a foil traveling direction of the conveying assembly.

11. The system of claim 1, wherein the current collector detection system has a measurement range of 0 to 2000 RFU, an excitation wavelength of 360 to 365 nm, a maximum power of 150 mW, and a measurement distance of 4.7 mm.

12. A current collector detection method, comprising:
emitting a first light to irradiate a surface of a target current collector, so that the target current collector receives the first light and reflects a second light based on the first light, the target current collector being sprayed with oil stains;
receiving a second light reflected by the target current collector, and converting the second light into a first electrical signal;
receiving the first electrical signal, determining a first fluorescence intensity corresponding to the first electrical signal based on a pre-calibrated correspondence between electrical signals and fluorescence intensities, and determining that the oil loading amount of the target current collector exceeds a second preset threshold in a case where the first fluorescence intensity is greater than a first preset threshold.

13. The method according to claim 12, further comprising:
collecting an image of a surface of a target current collector, determining an irradiation position of the first light on the surface of the target current collector based on the image, and using the irradiation position as a target detection position;
determining a target fluorescence intensity of the target detection position of the target current collector based on a target electrical signal corresponding to the target detection position, and determining that the oil loading amount at the target detection position exceeds the second preset threshold in a case that the target fluorescence intensity is greater than the first preset threshold, wherein the first electrical signal comprises the target electrical signal.

14. The method according to claim 12, further comprising:
outputting warning information in a case where the first fluorescence intensity is greater than the first preset threshold, the warning information being configured to prompt a user that the oil loading amount of the target current collector exceeds the second preset threshold.

15. The method according to claim 12, further comprising:
sending first feedback information to an oil spraying system in a case that the first fluorescence intensity is greater than the first preset threshold, so that the oil spraying system detects a temperature of sprayed oil stain based on the first feedback information, and adjusts the temperature to be within a first preset range in a case that the temperature exceeds the first preset range, wherein the first feedback information represents that the oil loading amount of the target current collector exceeds the second preset threshold.

16. The method according to claim 12, further comprising:
sending second feedback information to the oil injection system in a case that the first fluorescence intensity is greater than the first preset threshold, so that the oil injection system determines, from the plurality of oil injection nozzles based on a first position in the second feedback information, a target oil injection nozzle with an abnormal oil injection amount, and adjusts an oil injection amount of the target oil injection nozzle to be within a second preset range, wherein the second feedback information represents that the oil loading amount at the first position of the target current collector exceeds the second preset threshold.

17. The method according to claim 12, further comprising:
in a case where a difference between the fluorescence intensity at the second position and the fluorescence intensity at the third position of the target current collector is greater than a third preset threshold, sending third feedback information to the oil injection system, so that the oil injection system adjusts, based on the third feedback information, oil injection amounts of the plurality of oil injection nozzles of the oil injection system to a target oil injection amount, the target oil injection amount being within a second preset range, the third feedback information representing that the target current collector has an uneven oil loading amount.

18. The method according to claim 13, further comprising:
in a case where the target fluorescence intensity is greater than the first preset threshold and the target detection position is located in a first preset region, sending fourth feedback information to a current collector slitting system, so that the current collector slitting system cuts off the first preset region in the target current collector based on the fourth feedback information, the first preset region including a preset head region and / or a preset tail region of the target current collector, and the fourth feedback information representing that the oil loading amount at the target detection position of the target current collector exceeds the second preset threshold.

19. The method according to claim 12, further comprising:
in a case where the target fluorescence intensity is greater than the first preset threshold, sending fifth feedback information to a corona system, so that the corona system determines, based on a pre-calibrated correspondence between a fluorescence intensity and a corona parameter, a target corona parameter corresponding to the target fluorescence intensity included in the fifth feedback information, and adjusts a corona parameter for performing corona at the target detection position to the target corona parameter, wherein the fifth feedback information represents that the oil loading amount at the target detection position of the target current collector exceeds the second preset threshold, and the fluorescence intensity at the target detection position is the target fluorescence intensity.

20. The method according to claim 12, further comprising:
obtaining oil loading amounts and fluorescence intensities corresponding to a plurality of current collector samples with different cleanliness;
fitting the oil loading amounts and the fluorescence intensities of the plurality of current collector samples to obtain a correspondence between the oil loading amount and the fluorescence intensity;
determining a fluorescence intensity corresponding to the second preset threshold based on the correspondence between the oil loading amount and the fluorescence intensity;
determining the fluorescence intensity corresponding to the second preset threshold as the first preset threshold.
